Europäisches Patentamt

(19) European Patent Office

Office européen des brevets

(11) Numéro de publication : **0 027 069 B2**

(12) **NOUVEAU FASCICULE DE BREVET EUROPEEN**

(45) Date de publication du nouveau fascicule du brevet : **29.05.91 Bulletin 91/22**

(51) Int. Cl.⁵ : **B01D 53/36, B01J 23/76**

(21) Numéro de dépôt : **80401328.2**

(22) Date de dépôt : **18.09.80**

(54) **Catalyseur et procédé de traitement des gaz d'échappement des moteurs à combustion interne.**

Le dossier contient des informations techniques présentées postérieurement au dépôt de la demande et ne figurant pas dans le présent fascicule.

(30) Priorité : **04.10.79 FR 7924675**

(43) Date de publication de la demande : **15.04.81 Bulletin 81/15**

(45) Mention de la délivrance du brevet : **18.08.82 Bulletin 82/33**

(45) Mention de la décision concernant l'opposition : **29.05.91 Bulletin 91/22**

(84) Etats contractants désignés : **BE CH DE FR GB IT LI NL**

(56) Documents cités :
DE-A- 2 637 198
DE-A- 2 747 373
DE-A- 2 928 249
DE-B- 2 542 282
DE-B- 2 559 912
FR-A- 1 449 904
FR-A- 2 173 128

(56) Documents cités :
FR-A- 2 208 709
FR-A- 2 257 335
US-A- 3 794 588
CHEMICAL ABSTRACTS, vol. 81, no. 10, 9 septembre 1974, abrégé 53919k, pages 286-287 Columbus, Ohio, US, & JP-A-7423790

(73) Titulaire : **Société Française des Produits pour Catalyse : PROCATALYSE**
**21, rue Jean Goujon**
**F-75008 Paris (FR)**

(72) Inventeur : **Brunelle, Jean-Pierre**
**Rés. Fontaine Saint-Martin rue de la Planchette**
**F-95350 Saint-Brice-Sous-Foret (FR)**
Inventeur : **Courty, Philippe**
**91, rue Condorcet**
**F-78800 Houilles (FR)**
Inventeur : **Prigent, Michel**
**11, rue des Marronniers**
**F-92500 Rueil-Malmaison (FR)**
Inventeur : **Raynal, Bernard**
**42, rue Saint-Exupéry**
**F-78360 Montesson (FR)**

(74) Mandataire : **Dubruc, Philippe et al**
**RHONE-POULENC INTERSERVICES Service Brevets Chimie 25, quai Paul-Doumer**
**F-92408 Courbevoie Cédex (FR)**

## Description

Catalyseur et procédé de traitement des gaz d'échappement des moteurs à combustion interne

La présente invention a pour objet des catalyseurs multifonctionnels, plus particulièrement destinés au traitement des gaz d'échappement des moteurs à combustion interne.

On entend par multifonctionnels, selon l'invention, des catalyseurs, opérant l'oxydation en particulier du monoxyde de carbone et des hydrocarbures présents dans les gaz d'échappement ainsi que la réduction simultanée en particulier des oxydes d'azote présents dans ces gaz.

Dans les moteurs à combustion interne à essence, la composition des gaz d'échappement peut être réglée autour d'un équilibre stoechiométrique tel que l'oxydation et la réduction catalytique de ses divers constituants conduisent à de l'eau, du dioxyde de carbone et de l'azote. Les moyens généralement mis en oeuvre pour régler la composition du gaz d'échappement autour de cette stoechiométrie sont notamment le réglage en continu du rapport air/carburant à l'admission du moteur et/ou l'introduction d'oxygène supplémentaire en amont du catalyseur. La composition de gaz d'échappement varie ainsi sur des périodes de l'ordre de la seconde d'une composition contenant un excès relatif de composés oxydants (réglage dit "pauvre") à une composition contenant un excès de composés réducteurs (réglage dit "riche") et réciproquement.

En particulier, le réglage dit "pauvre" est tel que les quantités d'oxygène et d'oxyde d'azote présentes sont supérieures à celles requises pour produire l'oxydation de l'oxyde de carbone, des hydrocarbures et de l'hydrogène présents. Inversement, et en particulier, le réglage dit "riche" est tel que les quantités d'oxyde de carbone, d'hydrocarbures et d'hydrogène présentes sont supérieures à celles requises pour produire la réduction de l'oxygène et des oxydes d'azote présents.

Il a déjà été proposé des catalyseurs pour traiter de tels gaz d'échappement. Ainsi, d'après Journal of Catalysis 56, 321 (1979) et 6° Congrès Nord-Américain de la Catalysis Society – CHICAGO mars 79 – Communication H$_4$, on connaît des catalyseurs multifonctionnels ayant comme phase active de l'oxyde de cérium et des métaux précieux. D'après la demande japonaise n° J5 3062-777 (demande n° 138717 du 17. 11.76 publiée le 0.5.06.78) on connaît également des catalyseurs multifonctionnels ayant comme phase active de l'oxyde de fer et des métaux précieux.

De tels catalyseurs s'avèrent toutefois présenter une activité initiale et une stabilité au cours du temps insuffisantes pour répondre aux exigences anti-pollution actuelles.

On connaît par ailleurs, selon le brevet français FR-A-2 208 709 des catalyseurs pour le traitement de gaz d'échappement de moteur à combustion interne comportant du ruthénium et éventuellement du palladium et de 4 à 8% en poids de Fe, Cu, Ni, Nd ou Ce.

La demanderesse a trouvé de nouveaux catalyseurs multifonctionnels à base de fer, de cérium et de métaux précieux remédiant aux inconvénients présentés par les catalyseurs de l'art antérieur et qui s'avèrent, de façon totalement inattendue, présenter une excellente activité ainsi qu'une stabilité remarquable au cours du temps.

La présente invention concerne en effet un catalyseur multifonctionnel caractérisé en ce qu'il comporte : un support à base d'oxyde réfractaire et une phase active constituée de cérium, de fer, d'au moins un métal choisi parmi le platine et le palladium et d'au moins un métal choisi parmi l'iridium et le rhodium, la teneur en platine et/ou palladium étant comprise entre 0,04 et 0.5% en poids par rapport au support ; la teneur en iridium et/ou rhodium étant comprise entre 0,002 et 0, 1% en poids par rapport au support ; le rapport entre le poids d'iridium et/ou rhodium étant compris entre 4 et 40 et de préférence entre 7 et 20 ; la teneur en fer étant comprise entre 0,1 et 3,5% en poids par rapport au support ; et la teneur en cérium étant comprise entre 0,3 et 4,4% en poids par rapport au suport.

Le support à base d'oxyde réfractaire mis en oeuvre selon l'invention peut notamment être constitué par de la silice, de l'alumine, des alumino-silicates ou des oxydes mixtes comprenant par exemple de l'alumine associée avec de la silice, de l'oxyde de zirconium, de l'oxyde de cérium et/ou de l'oxyde de titane.

Selon un mode de mise en oeuvre préféré de l'invention, on utilise un support à base d'alumine. Ce support présente de préférence une surface spécifique comprise entre 25 et 250 m²/g et, plus particulièrement comprise entre 70 et 150 m²/g. Il présente un volume poreux total de préférence compris entre 0,5 et 2 cm³/g et, plus particulièrement comprise entre 0,8 et 1,7 cm³/g. Il possède de préférence une macroporosité telle que le volume poreux des pores dont le diamètre est supérieur à 1000 Å est compris entre 0,05 et 0,6 cm³/g, et, de préférence entre 0,2 et 0,5 cm³/g.

De tels supports peuvent notamment avoir été fabriqués à partir de l'alumine active obtenue selon le procédé décrit dans le brevet américain US-A-2 915 365 et agglomérée selon le procédé décrit dans le brevet américain US-A-2 881051.

Ils peuvent également avoir été fabriqués par autoclavage en milieu neutre ou acide des agglomérés pré- cédents, séchage et calcination notamment tel que décrit dans les brevets français FR-A-1449 904 et FR-A-1386 364.

Les supports mis en oeuvre peuvent également avoir été obtenus selon le procédé décrit dans la demande de brevet français n° 77 23880 publiée sous le numéro 2 399 276.

Les supports d'alumine mis en oeuvre peuvent également avoir été fabriqués selon le procédé (P) décrit ci-après. Selon ce procédé, on fabrique des billes d'alumine ayant les caractéristiques données en opérant selon les étapes suivantes :

A) On mélange à un pH inférieur à 7,5 et, de préférence compris entre 4 et 7, d'une part un sol de boehmite ultrafine ou de pseudo-boehmite, le sol de boehmite étant exempt d'alumine amorphe, la concentration en poids du sol exprimée en $Al_2O_3$ étant comprise entre 10 et 25% et, d'autre part dans une proportion comprise entre 30 et 95% en poids (rapporté aux solides totaux), des particules sphéroïdales d'alumine, se présentant essentiellement sous forme d'au moins une des phases prise dans le group constitué par les phases gamma, delta, thêta ; ces particules présentent un volume microporeux compris entre 0,4 et 1 $cm^3/g$ et, de préférence, entre 0,7 et 1 $cm^3/g$, une surface spécifique comprise entre 100 et 350 $m^2/g$, le diamètre des particules étant compris entre 1 et 50 microns, et de préférence, tel qu'au moins 50% des particules sphéroïdales aient un diamètre $\varnothing$ compris autour d'une valeur moyenne $\varnothing_M$ tel que $\varnothing = \varnothing_M \pm 20\% \varnothing_M$.

B) On met sous forme sphéroïdale et on gélifie des gouttes du mélange, de préférence selon la technique dite "oil-drop" bien connue de l'homme de l'art.

C) On récupère les billes gélifiées que l'on sèche et que l'on calcine à une température comprise entre 550 et 1100°C.

Le sol de boehmite ultra-fine mis en oeuvre peut avoir été obtenu par chauffage d'une dispersion aqueuse d'alumine en présence d'un radical d'acide fort monovalent. La dispersion aqueuse d'alumine ayant été préparée à partir de chlorure basique d'alumine, de nitrate basique d'alumine, d'hydroxyde d'alumine, de gel d'alumine ou de solutions colloïdales d'alumine, il peut également provenir du traitement d'une poudre d'alumine active présentant une structure mal cristallisée et/ou amorphe dans un milieu aqueux ayant un pH inférieur à 9 ; l'alumine active ayant de préférence été obtenue par déshydratation rapide d'hydroxydes ou d'oxyhydroxydes d'aluminium dans un courant de gaz chauds.

Le sol de boehmite ultra-fine mis en oeuvre peut également avoir été obtenu, de préférence par évolution, à une température comprise entre 60 et 150°C d'une suspension ou d'un gâteau de gel d'alumine hydratée amorphe contenant jusqu'à 35% en poids d'alumine comptée en $Al_2O_3$ et, par rapport à cette alumine comptée en moles d'$Al_2O_3$, une quantité d'ions acides monovalents variant de 0,05 à 0,5 pendant un temps de 15 heures à 10 jours ; le gâteau ayant été obtenu par essorage, lavage et filtration du gel d'alumine précipité en continu à un pH compris entre 8 et 9 à partir d'une solution d'aluminate de soude et d'acide nitrique.

Les particules sphéoïdales mises en oeuvre peuvent avoir été préparées selon l'une des techniques suivantes :

– précipitation d'une solution aqueuse d'un sel d'alumine par une solution d'un aluminate alcalin, atomisation du précipité obtenu puis remise en suspension dans une solution aqueuse ayant un pH compris entre 4,5 et 7, atomisation et séchage de la bouillie d'alumine obtenue puis lavage, séchage et calcination à une température comprise entre 550 et 1100°C du produit obtenu.

– précipitation d'un gel d'alumine à un pH compris entre 7,5 et 11, lavage, essorage, remise en suspension puis déshydratation rapide dans un courant de gaz chauds à une température d'entrée comprise entre environ 350 et 1000°C, puis calcination à une température comprise entre 550 et 1100°C du produit obtenu.

– précipitation d'un gel d'alumine à un pH compris entre 7 et 10,5, mûrissement du précipité à un pH compris entre 10 et 11, homogénéisation et atomisation à 250-550°C de la bouillie obtenue, puis calcination à une température comprise entre 550 et 1100°C du produit obtenu.

– précipitation d'un aluminate alcalin par un acide minéral à une température comprise entre 30 et 75°C, mûrissement dans un second réacteur à 30-75°C à un pH voisin de 7, recyclage de la bouillie obtenue dans le réacteur de mélange, filtration, lavage, séchage par atomisation, puis calcination à une température comprise entre 550 et 1100°C 00°C du produits obtenu.

– atomisation et calcination à une température comprise entre 550 et 1100°C de suspensions aqueuses de boehmite ultra-fine, de pseudo-boehmite et/ou d'alumine amorphe.

– traitement par une base décomposable en produits volatiles de dispersions aqueuses de boehmite ultra-fine, de pseudo-boehmite et/ou d'alumine amorphe. Séchage et calcination à une température comprise entre 550 et 1100°C.

Les particules sphéroïdales d'alumine peuvent également avoir été obtenues selon le procédé comportant les étapes suivantes :

– préparation d'une dispersion aqueuse d'alumine au moins partiellement sous forme de boehmite ultra- fine par traitement d'une poudre d'alumine active présentant une structure mal cristallisée et/ou amorphe dans un milieu aqueux ayant un pH inférieur à 9. L'alumine active ayant, de préférence, été obtenue par déshydratation rapide d'hydroxydes ou d'oxyhydroxydes d'aluminium dans un courant de gaz chaud.

– traitement éventuel de la suspension par une base décomposable en produits volatils.

D'une manière générale les supports à base d'alumine mis en oeuvre selon l'invention peuvent avoir été traités ainsi qu'il est bien connu de l'homme de l'art par des agents porogènes tels que ceux à base de cellulose, naphtaline, gommes naturelles, polymères synthétiques, etc... afin de leur conférer les propriétés de porosité désirée.

Par ailleurs, ces supports peuvent avoir avantageusement été traités de façon à leur conférer une bonne stabilité thermique au cours du temps, ainsi qu'il est bien connu de l'homme de l'art. Ces traitements consistent notamment à leur introduire des métaux alcalino-terreux, de la silice et/ou des terres rares trivalentes. Les supports stabilisés décrits dans les brevets français n° 2 257 335 et n° 2 290 950 au nom de la demanderesse conviennent particulièrement.

La teneur en métal du groupe constitué par le platine et le palladium du catalyseur varie entre 0,04 et 0,5% en poids par rapport au support et de préférence entre 0,05 et 0,15% en poids. Celle en métal du groupe constitué par l'iridium et le rhodium varie entre 0,002 et 0,1% en poids et de préférence entre 0,005 et 0,02% en poids.

Le rapport entre le poids de platine et/ou de palladium et le poids d'iridium et/ou de rhodium est compris entre 4 et 40 et de préférence entre 7 et 20.

Selon un mode de mise en oeuvre particulier des catalyseurs selon l'invention, on préférera utiliser le rhodium associé au platine et/ou au palladium.

La teneur en fer des catalyseurs selon l'invention est comprises entre 0,1 et 3,5% en poids par rapport au support et plus particulièrement entre 0,5 et 2%.

La teneur en cérium des catalyseurs selon l'invention est comprise entre 0,3 et 4,4% en poids par rapport au support.

La proportion relative en poids de fer par rapport à celle de cérium est ainsi comprise entre environ 0,014 et 12.

Selon une variante de l'invention, les catalyseurs peuvent en outre comporter l'un au moins des métaux suivants : cuivre, nickel, manganèse, étain, germanium, uranium, rhénium. La teneur totale en poids de ces métaux rapportés au support est comprise entre environ 0.5 et 5%.

Les catalyseurs selon l'invention peuvent être préparés selon les méthodes courantes, soit par imprégnation du support soit par apport des métaux de la phase active lors de la fabrication du support.

On opère, de préférence, par imprégnation du support au moyen de solution de composés minéraux ou organiques des métaux que l'on désire introduire. L'imprégnation peut être faite au moyen de solutions communes aux métaux ou successivement avec différentes solutions.

Selon un mode de mise en oeuvre particulier, on imprègne successivement support avec une solution contenant des composés du fer et du cérium puis avec un ou des solutions contenant des composés des métaux précieux que l'on désire introduire.

Comme composés du fer et du cérium que l'on peut mettre en oeuvre, on citera notamment les sels de fer et de cérium et, plus particulièrement, le nitrate ferrique, le citrate de fer ammoniacal, le chlorure ferrique et le nitrate céreux, l'acétate céreux, le chlorure céreux et le nitrate cérique ammoniacal.

Comme composés du rhodium, du platine et du palladium que l'on peut mettre en oeuvre, on citera notamment le trichlorure de rhodium hydraté, l'acide chloroplatinique, le chlorure de palladium ainsi que le dichlorure de rhodium III chloropentamine et les dichlorures de platine II et palladium II tétramine.

La profondeur d'imprégnation peut être avantageusement réglée par l'utilisation de méthodes connues de l'homme de l'art et en particulier par ajout dans la solution des métaux précieux d'une certaine quantité d'acide minéral ou organique. On utilise couramment les acides nitrique, chlorhydrique et fluorydrique ou les acides acétique, citrique et oxalique.

Après imprégnation du support, le catalyseur est ensuite séché puis activé dans un courant d'air à une température comprise entre environ 300 et 800°C pendant quelques heures.

L'activation du catalyseur peut être avantageusement réalisée en atmosphère réductrice à une température comprise entre environ 200 et 700°C, on peut par exemple utiliser comme agents réducteurs l'hydrogène, l'oxyde de carbone et/ou l'hydrogène sulfuré.

On a constaté que les catalyseurs selon l'invention permettent d'éliminer très efficacement la majeure partie de l'oxyde de carbone, des hydrocarbures imbrûlés ainsi que des oxydes d'azote présents dans les gaz d'echappement des moteurs à combustion interne et que de plus ils possèdent une stabilité remarquable au cours du temps.

Les exemples non limitatifs donnés ci-après illustrent l'invention et en particulier les avantages des pré-

4

sents catalyseurs par rapport à ceux décrits dans l'art antérieur.

Exemple 1

Préparation d'un catalyseur (A) selon l'invention.

100 g de billes d'alumine de structure gamma sont préparés selon le procédé décrit dans le brevet français n° 1449 904 par autoclavage en présence d'acide d'agglomérés d'alumine active, séchage et calcination. Ces billes présentent une surface spécifique de 100 m²/g, un volume poreux total de 0,90 cm³/g et un volume de 0,30 cm³/g constitué par des macropores ayant un diamètre supérieur à 1000 Å.

Ces billes sont imprégnées par 90 cm³ d'une solution aqueuse de nitrate ferrique et de nitrate céreux contenant 1 g de fer et 3,5 g de cérium.

Après 30 minutes de contact, les billes sont séchées à 150°C puis calcinées sous air à 600°C pendant 3 heures.

Elles sont ensuite imprégnées par 90 cm³ d'une solution d'acide chloroplatinique et de trichlorure de rhodium hydraté contenant 73 mg de platine et 7,3 mg de rhodium.

Après 30 minutes de contact, les billes sont séchées à 150°C puis activées à 400°C pendant 3 heures dans un courant d'hydrogène circulant à 200 litres par heure.

Le catalyseur (A) ainsi préparé contient en poids rapporté au support 0,073% de platine ; 0,0073% de rhodium ; 1% de fer et 3,5% de cérium.

Exemple 2

Préparation d'un catalyseur (B) selon l'invention.

On prépare 100 g de billes d'alumine selon le procédé (P) décrit ci-dessus. Ces billes présentent une surface spécifique de 100 m²/g, un volume poreux total de 1,20 cm³/g et un volume de 0,45 cm³/g constitué par des macropores ayant un diamètre supérieur à 1000 A.

Le mode opératoire utilisé pour l'imprégnation est semblable à celui décrit dans l'exemple 1 ci-dessus. On utilise cette fois 120 cm³ d'une solution aqueuse de nitrate ferrique et de nitrate céreux contenant 1 g de fer et 3,5 g de cérium puis 120 cm³ d'une solution d'acide chloroplatinique et de trichlorure de rhodium hydraté contenant 90 mg de platine et 9 mg de rhodium.

Le catalyseur (B) ainsi préparé contient en poids rapporté au support 0,09% de platine ; 0,009% de rhodium ; 1% de fer et 3,5% de cérium.

Exemple 3

Préparation d'un catalyseur (C) de l'art antérieur.

100 g de billes d'alumine tel que décrit à l'exemple 1 sont imprégnées par 90 cm³ d'une solution aqueuse de nitrate ferrique contenant 4,5 g de fer. Après 30 minutes de contact, les billes sont séchées à 150°C puis calcinées sous air à 600°C pendant 3 heures. Elles sont ensuite imprégnées par 90 cm³ d'une solution d'acide chloroplatinique et de trichlorure de rhodium hydraté contenant 73 mg de platine et 7,3 mg de rhodium. Après 30 minutes de contact, les billes sont séchées à 150°C puis activées à 400°C pendant 3 heures dans un courant d'hydrogène circulant à 200 litres par heure.

Le catalyseur (C) ainsi préparé contient en poids rapporté au support 0,073% de platine : 0,0073% de rhodium et 4,5% de fer.

Exemple 4

Préparation d'un catalyseur (D) de l'art antérieur.

On opère de façon strictement similaire à celle de l'exemple 3 donné ci-dessus avec pour seule différence la mise en oeuvre au cours de la première imprégnation des billes d'alumine d'une solution de nitrate céreux au lieu de nitrate ferrique. La solution de nitrate céreux contient 4,5 g de cérium.

On obtient un catalyseur (D) qui contient en poids rapporté au support 0,073% de platine ; 0,0073% de rhodium et 4 5% de cérium.

Exemple 5

Préparation d'un catalyseur (E) selon l'invention. Le catalyseur (E) se distingue du catalyseur (A) dont la préparation a été décrite à l'exemple 1 ci-dessus par des teneurs en fer et en cérium différentes. Pour préparer le catalyseur (E) on opère de façon similaire à celle décrite dans l'exemple 1 en mettant en oeuvre une première solution d'imprégnation de nitrate ferrique et de nitrate céreux contenant 2 g de fer et 3,5 g de cérium ; la suite de la préparation est identique à celle de l'exemple 1.

Le catalyseur (E) ainsi obtenu contient en poids rapporté au support 0,073% de platine ; 0,0073% de rhodium 2% de fer et 2 5% de cérium.

Exemple 6

Préparation d'un catalyseur (F) à teneur en fer et cérium en dehors de l'invention.

Le présent exemple donné à titre comparatif illustre la préparation d'un catalyseur dont les teneurs en fer et en cérium sont en dehors de l'invention. Un tel catalyseur, non seulement présente des propriétés catalytiques bien inférieures à celles des catalyseurs de l'invention, mais s'avère économiquement peu intéressant du fait des grandes quantités de métaux mis en oeuvre.

Pour préparer le catalyseur (F) on opère de façon similaire à celle décrite dans l'exemple 1 en mettant en oeuvre une première solution d'imprégnation de nitrate ferrique et de nitrate céreux contenant 5 g de fer et 7,5 g de cérium ; la suite de la préparation est identique à celle de l'exemple 1. Le catalyseur (F) ainsi obtenu contient en poids rapporté au support 0,073% de platine ; 0,0073% de rhodium ; 5% de fer et 7 5% de cérium.

Exemple 7

Préparation d'un catalyseur (G) selon l'invention.

100 g de billes d'alumine tel que décrit à l'exemple 1 sont imprégnées par 90 cm$^3$ d'une solution aqueuse de nitrate ferrique, de nitrate céreux et de nitrate de manganèse contenant 1 g de fer. 3,5 g de cérium et 1 g de manganèse.

Après 30 minutes de contact, les billes sont séchées à 150°C puis calcinées sous air à 600°C pendant 3 heures. Elles sont ensuite imprégnées par 90 cm$^3$ d'une solution d'acide chloroplatinique et de trichlorure de rhodium hydraté contenant 73 mg de platine et 7,3 mg de rhodium. Après 30 minutes de contact, les billes sont séchées à 150°C puis activées à 400°C pendant 3 heures dans un courant d'hydrogène circulant à 200 litres par heure.

Le catalyseur (C) ainsi préparé contient en poids rapporté au support 0,073% de platine ; 0,0073% de rhodium 1% de fer, 3,5% de cérium et 1% de manganèse.

Exemple 8

Activités des divers catalyseurs mesurées sur banc moteur.

Le présent exemple rassemble les résultats obtenus sur banc-moteur avec les catalyseurs (A), (B), (C), (D), (E), (F), (G) décrits respectivement dans les exemples 1 à 7.

Les essais ont été effectués en chargeant successivement 1000 cm$^3$ de chacun des catalyseurs dans un réacteur de type cylindrique à circulation axiale (diamètre intérieur 14 cm, épaisseur du lit de catalyseur 6,5 cm).

Le réacteur est adapté sur le circuit d'échappement d'un moteur au banc d'essai en interposant entre le moteur et le réacteur un dispositif permettant de réguler la température de gaz à 350°C en entrée du réacteur.

Le moteur est un moteur d'automobile à essence comprenant 4 cylindres d'une cylindrée de 1600 cm$^3$ et dont le rapport volumétrique est de 8,8/1. Il est accouplé à un frein hydraulique et fonctionne en régime stabilisé à 3000 tours/minute en fournissant une puissance d'environ 25 KW.

L'alimentation en carburant est réglée de manière à ce que le rapport entre le débit d'air et le débit de carburant à l'admission soit égal au rapport stoechiométrique de combustion (richesse égale à 1).

Le débit des gaz d'échappement passant sur le catalyseur est dans ces conditions de 46 Nm$^3$/heure et les teneurs initiales des principaux polluants sont les suivantes :

– monoxyde de carbone (CO) : 0,55% en volume

6

– hydrocarbures imbrûlés (HC) : 0,14% en volume exprimé en équivalent méthane

– oxydes d'azote (NO + NO₂) : 0,31% en volume

Le dosage de ces composés est effectué avant et après passage des gaz d'échappement sur le catalyseur par les techniques analytiques habituelles suivantes :

– CO : absorption infra-rouge (analyseur COSMA Rubis 3000)

– HC : analyse par ionisation de flamme (analyseur IPM)

– NO + NO₂ (NOₓ) : chimiluminescence (analyseur Thermoélectron 10A).

Le tableau ci-après rassemble les résultats obtenus dans des conditions de température qui permettent de bien différencier les catalyseurs du point de vue de leur aptitude au démarrage à froid.

TABLEAU 1

Activitiés mesurées sur banc-moteur a 350°C et exprimées en pourcentage de conversion de l'oxyde de carbone (CO), des hydrocarbures (HC) et des oxydes d'azote (NOₓ)

| Numéro de l'exemple | Référence du catalyseur | % Conversion mesurée a 350° C | | |
|---|---|---|---|---|
| | | CO | HC | NOₓ |
| 1 (invention) | A | 59 | 53 | 70 |
| 2 (invention) | B | 68 | 60 | 84 |
| 3 (comparatif) | C | 10 | 9 | 13 |
| 4 (comparatif) | D | 27 | 18 | 34 |
| 5 (invention) | E | 77 | 73 | 92 |
| 6 (comparatif) | F | 35 | 22 | 36 |
| 7 (invention) | G | 63 | 58 | 75 |

Exemple 9

Activités des divers catalyseurs mesurées sur voiture selon le cycle américain CVS-CH.

Le présent exemple rassemble les résultats obtenus sur voiture selon le cycle américaine CVS-CH avec les divers catalyseurs (A), (B), (C), (D), (E), (F), et (G) décrits respectivement dans les exemples 1 à 7.

Les conditions de ce test sont précisées dans la référence suivante : "Federal Register, Vol. 42, n° 124 – June 28, 1977, pages 32906 à 33004, Title 40 Protection of Environment, Chap. 1, Environmental Protection Agency, Part 86 Central of air pollution from new-motor vehicles and newmotor vehicle engines."

Le véhicule utilisé est une RENAULT R 17 TS équipée à un dispositif d'injection électronique prototype BOSCH-L JETRONIC régulé par une sonde à oxygène. L'inertie de ce véhicule est de 2750 lbs (1250 Kg). Le réglage du frein hydraulique simulant la résistance à l'avancement sur route effectué conformément à la norme fédérale américaine correspond sur le banc à rouleaux utilisé à une force de traction à la balance de 245 N (25 Kgf) à 80 Km/h.

Les émissions de base due véhicule sans pot catalytique sont les suivantes :

CO : 12,3 g/mile (1,60 g Km)

HC : 1,8 g/mile

NOₓ : 2,4 g/mile

7

Un pot catalytique expérimental de type cylindrique à circulation radiale, d'un volume de 1700 cm³ a été adapté sur la tubulure d'échappement à une distance d'environ 1,7 m du moteur.

Le tableau 2 ci-après rassemble les résultats obtenus avec les divers catalyseurs (A), (B), (C), (D), (E), (F) et (G) décrits respectivement dans les exemples 1 à 7.

## TABLEAU 2

Emissions d'oxyde de carbone (CO), d'hydrocarbures (HC) et d'oxydes d'azote ($NO_x$) mesurées sur voiture suivant le cycle américain CVS—CH et exprimées en gramme par mile (1,60 g Km)

| Numéro de l'exemple | Référence du catalyseur | Emissions après stabilisation du catalyseur sur route pendant 50 miles (80,465 Km) | | | Emissions après vieillissement du catalyseur sur banc moteur pendant 150 heures à 600°C | | |
|---|---|---|---|---|---|---|---|
| | | CO | HC | $NO_x$ | CO | HC | $NO_x$ |
| 1 invention | A | 1,19 | 0,22 | 0,27 | 2,03 | 0,24 | 0,35 |
| 2 invention | B | 1,04 | 0,19 | 0,22 | 1,82 | 0,22 | 0,33 |
| 3 comparatif | C | 1,46 | 0.23 | 0,38 | 4,43 | 0,77 | 1,62 |
| 4 comparatif | D | 1,47 | 0,25 | 0,37 | 2,50 | 0,29 | 0,63 |
| 5 invention | E | 0,96 | 0,21 | 0,27 | 1,92 | 0,25 | 0,38 |
| 6 comparatif | F | 1,06 | 0,22 | 0,31 | 3,12 | 0,36 | 0,72 |
| 7 invention | C | 1,15 | 0,17 | 0,26 | 1,86 | 0,18 | 0,33 |

Les résultats présentés dans les tableaux 1 et 2 mettent bien en évidence la supériorité des catalyseurs (A), (B), (E) et (G) selon l'invention sur les catalyseurs (C), (D) et (F) de l'art antérieur et ce, aussi bien au point de vue activité initiale qu'au point de vue stabilité dans le temps.

## Revendications

1. Catalyseur pour le traitement des gaz d'échappement des moteurs à combustion interne caractérisé en ce qu'il comporte : un support à base d'oxyde réfractaire et une phase active constituée de cérium, de fer, d'au moins un métal choisi parmi le platine et le palladium et d'au moins un métal choisi parmi l'iridium et le rhodium; la teneur en platine et/ou palladium étant comprise entre 0,04 et 0,5% en poids par rapport au support ; la teneur en iridium et/ou rhodium étant comprise entre 0,002 et 0,1% en poids par rapport au support ; le rapport entre le poids de platine et/ou de palladium et le poids d'iridium et/ou de rhodium étant compris entre 4 et 40 et de préférence entre 7 et 20 ; la teneur en fer étant comprise entre 0,1 et 3,5% en poids par rapport au support ; et la teneur en cérium est comprise entre 0,3 et 4,4% en poids par rapport au support.

2. Catalyseur selon la revendication 1, caractérisé en ce que le support à base d'oxyde réfractaire est choisi parmi la silice, l'alumine, les aluminosilicates, les oxydes mixtes comprenant l'alumine associée avec de la silice, de l'oxyde de zirconium, de l'oxyde de cérium et/ou de l'oxyde de titane.

3. Catalyseur selon la revendication 2 caractérisé en ce que le support à base d'oxyde réfractaire est un

8

support à base d'alumine présentant une surface spécifique comprise entre 25 et 250 m²/g, un volume poreux total compris entre 0,5 et 2 cm³/g, une macroporosité telle que le volume poreux des pores dont le diamètre est supérieur à 1000 Å est compris entre 0,05 et 0,6 cm³/g.

4. Catalyseur selon la revendication 3 caractérisé en ce que le support à base d'alumine présente une surface spécifique comprise entre 70 et 150 m²/g, un volume poreux total compris entre 0,8 et 1,7 cm³/g, une macroporosité telle que le volume poreux des pores dont le diamètre est supérieur à 1000 Å est compris entre 0,2 et 0,5 cm³/g.

5. Catalyseur selon la revendication 3 caractérisé en ce que le support à base d'alumine a été fabriqué par autoclavage en milieu neutre ou acide d'agglomérés d'alumine active, séchage et calcination.

6. Catalyseur selon la revendication 3 caractérisé en ce que le support à base d'alumine a été fabriqué en opérant selon les étapes suivantes :

A) On mélange à un pH inférieur à 7,5 et, de préférence compris entre 4 et 7, d'une part un sol de boehmite ultra-fine ou de pseudo-boehmite, le sol de boehmite étant exempt d'alumine amorphe, la concentration en poids du sol exprimée en $Al_2O_3$ étant comprise entre 10 et 25% et, d'autre part dans une proportion comprise entre 30 et 95% en poids (rapporté aux solides totaux), des particules sphéroidales d'alumine, se présentant essentiellement sous forme d'au moins une des phases prise dans le groupe constitué par les phases gamma, delta, thêta ; ces particules présentent un volume microporeux compris entre 0,4 et 1 cm³/g et, de préférence entre 0,7 et 1 cm³/g, une surface spécifique comprise entre 100 et 350 m²/g, le diamètre des particules étant compris entre 1 et 50 microns, et de préférence, tel qu'au moins 50% des particules sphéroidales aient un diamètre $\varnothing$ compris autour d'une valeur moyenne $\varnothing_M$ tel que $\varnothing = \varnothing_M \pm 20\% \varnothing_M$.

B) On met sous forme sphéroidale et on gélifie des gouttes du mélange, de préférence selon la technique dite oil-drop.

C) On récupère les billes gélifiées que l'on sèche et que l'on calcine à une température comprise entre 550 et 1100°C.

7. Catalyseur selon l'une quelconque des revendications 3 à 6 caractérisé en ce que le support à base d'alumine a été traité par un agent porogène pris dans le groupe constitué par les agents porogènes à base de cellulose, la naphtaline, les gommes naturelles, les polymères synthètiques.

8. Catalyseur selon l'une quelconque des revendications 3 à 6 caractérisé en ce que le support à base d'alumine a été stabilisé thermiquement en lui introduisant un métal alcalino-terreux, de la silice, une terre rare trivalente.

9) Catalyseur selon la revendication 1 caractérisé en ce que la teneur en platine et/ou palladium est comprise entre 0,05 et 0,15% ; la teneur en iridium et/ou rhodium est comprise entre 0,005% et 0,02% ; la teneur en fer est comprise entre 0,5 et 2% ; la teneur en cérium est comprise entre 0,3 et 4,4%.

10. Catalyseur selon la revendication 1 ou 9 caractérisé en ce que la phase active est constituée de cérium, de fer, de rhodium, de platine et/ou de palladium.

11. Catalyseur selon l'une quelconque des revendications précédentes caractérisé en ce que la phase active contient en outre au moins l'un des métaux choisi parmi le cuivre, le nickel, le manganèse, l'étain, le germanium, l'uranium, le rhénium.

12. Procédé de traitement des gaz d'échappement des moteurs à combustion interne permettant notamment d'éliminer la majeure partie de l'oxyde de carbone, des hydrocarbures imbrûlés et des oxydes d'azote présents dans ces gaz caractérisé en ce que l'on utilise le catalyseur selon l'une quelconque des revendications 1 à 11.

## Ansprüche

1. Katalysator zur Behandlung der Abgase von Verbrennungsmotoren, dadurch gekennzeichnet, daß er einen Träger auf der Grundlage eines feuerfesten Oxids und eine aktive Phase enthält, die aus Cer, Eisen, wenigstens einem der Metalle Platin oder Palladium und wenigstens einem der Metalle Iridium oder Rhodium besteht, wobei der Gehalt an Platin und/oder Palladium zwischen 0,04 und 0,5 Gew.%, bezogen auf den Träger, der Gehalt an Iridium und/oder Rhodium zwischen 0,002 und 0,1 Gew.%, bezogen auf den Träger, beträgt, und
das Gewichtsverhältnis von Platin und/oder Palladium zu Iridium und/oder Rhodium zwischen 4 und 40 und vorzugsweise zwischen 7 und 20, der Eisengehalt zwischen 0,1 und 3,5 Gew.%, bezogen auf den Träger, und der Cergehalt zwischen 0,3 und 4,4 Gew.%, bezogen auf den Träger, liegt.

2. Katalysator nach Anspruch 1, dadurch gekennzeichnet, daß der Träger auf der Grundlage eines feuerfesten Oxids aus Siliciumdioxid, Aluminiumoxid, Aluminosilicaten, Aluminiumoxid in Verbindung mit Siliciumdioxid enthaltenden gemischten Oxiden, Zirkoniumoxid, Ceroxid und/oder Titanoxid ausgewählt ist.

3. Katalysator nach Anspruch 2, dadurch gekennzeichnet, daß der Träger auf der Grundlage eines feuerfesten Oxids ein Träger auf Aluminiumoxidgrundlage mit einer spezifischen Oberfläche zwischen 25 und 250 m²/g, einem Gesamtporenvolumen zwischen 0,5 und 2 cm³/g und einer solchen Makroporosität ist, daß das Porenvolumen der Poren mit einem Durchmesser über 100 nm (1000 Å) zwischen 0,05 und 0,6 cm³/g beträgt.

4. Katalysator nach Anspruch 3, dadurch gekennzeichnet, daß der Träger auf Aluminiumoxidgrundlage eine spezifische Oberfläche zwischen 70 und 150 m²/g, ein Gesamtporenvolumen zwischen 0,8 und 1,7 cm³/g und eine solche Makroporosität hat, daß das Porenvolumen der Poren mit einem Durchmesser über 100 nm (1000 Å) zwischen 0,2 und 0,5 cm³/g beträgt.

5. Katalysator nach Anspruch 3, dadurch gekennzeichnet, daß der Träger auf Aluminiumoxidgrundlage durch Erhitzen von Agglomeraten aus aktivem Aluminiumoxid im Autoklaven in neutralem oder saurem Medium, Trocknen und Calcinieren hergegestellt ist.

6. Katalysator nach Anspruch 3, dadurch gekennzeichnet, daß der Träger auf Aluminiumoxidgrundlage durch folgende Verfahrensstufen hergestellt worden ist :

A) Man vermischt bei einem pH-Wert unter 7,5 und vorzugsweise zwischen 4 und 7, einerseits ein Sol von ultrafeinem Boehmit oder Pseudo-Boehmit, wobei ersteres frei von amorphem Aluminiumoxid ist, und dessen Konzentration, berechnet als $Al_2O_3$ und bezogen auf das Sol zwischen 10 und 25 Gew.% beträgt und andererseits kugelähnliche Aluminiumoxidteilchen, die im wesentlichen die Form wenigstens einer der Phasen aus der aus γ-, δ- und ϑ-Phase bestehenden Gruppe aufweisen, in einem Gewichtsverhältnis von 30 bis 95 Gew.% (bezogen auf den Gesamtfeststoffgehalt), wobei die Teilchen ein Mikroporenvolumen zwischen 0,4 und 1 cm³/g und vorzugsweise zwischen 0,7 und 1 cm³/g, eine spezifische Oberfläche zwischen 100 und 350 m³/g, einen Teilchendurchmesser zwischen 1 und 50 μm und vorzugsweise einen solchen Durchmesser besitzen, daßwenigstens 50% der kugelähnlichen Teilchen derart einen Durchmesser $\varnothing$ um einen Mittelwert $\varnothing_M$ aufweist, dab $\varnothing = \varnothing_M \pm 20\% \varnothing_M$ ist.

B) Man bringt Tropfen des Gemisches in eine kugelähnliche Form und geliert sie worzugsweise nach der sog. Öltropfen-technick.

C) Man gewinnt die gelierten Kugeln, trocknet und calciniert sie bei einer Temperatur zwischen 550 und 1100°C.

7. Katalysator nach einem der Ansprüche 3 bis 6, dadurch gekennzeichnet, daß der Träger auf Aluminiumoxidgrundlage mit einem porenbildenden Mittel aus der Gruppe porenbildender Mittel auf Basis von Cellulose, Naphthalin, Naturgummiarten oder synthetischen Polymeren behandelt wurde.

8. Katalysator nach einem der Ansprüche 3 bis 6, dadurch gekennzeichnet, daß der Träger auf Aluminiumoxidgrundlage thermisch durch Einführung eines Erdalkalimetalls, von Siliciumdioxid oder einer dreiwertigen seltenen Erde stabilisiert wurde.

9. Katalysator nach Anspruch 1, dadurch gekennzeichnet, daß der Gehalt an Platin und/oder Palladium zwischen 0,05 und 0,15%,
der Gehalt an Iridium und/oder Rhodium zwischen 0,005 und 0,02%,
der Gehalt an Eisen zwischen 0,5 und 2% und der Gehalt an Cer zwischen 0,3 und 4,4% beträgt.

10. Katalysator nach Anspruch 1 oder 9, dadurch gekennzeichnet, daß die aktive Phase aus Cer, Eisen, Rhodium, Platin und/oder Palladium besteht.

11. Katalysator nach einem der vorhergehenden Ansprüche, dadurch gekennzeichnet, daß die aktive Phase zusätzlich wenigstens eines der Metalle enthält, die aus Kupfer, Nickel, Mangan, Zinn, Germanium, Uran und Rhenium ausgewählt sind.

12. Verfahren zur Behandlung der Abgase von Verbrennungsmotoren, das insbesondere die Entfernung des größten Teils des Kohlenmonoxids, der unverbrannten Kohlenwasserstoffe und der in diesen Gasen vorliegenden Stickoxide ermöglicht, dadurch gekennzeichnet, daß man den Katalysator nach einem der Patentansprüche 1 bis 11 verwendet.

## Claims

1. Catalyst for the treatment of the exhaust gases from internal combustion engines, characterised in that it comprises : a support based on a refractory oxide and an active phase consisting of cerium, iron, at least one metal chosen from among platinum and palladium and at least one metal chosen from among iridium and rhodium, the content of platinum and/or palladium being between 0.04 and 0.5% by weight relative to the support, the content of iridium and/or rhodium being between 0.002 and 0.1% by weight relative to the support, the ratio of the weight of platinum and/or palladium to the weight of iridium and/or rhodium being between 4 and 40 and preferably between 7 and 20, the content of iron being between 0.1 and 3.5% by weight relative to the support, and the content of cerium being between 0.3 and 4.4% by weight relative to the support.

2. Catalyst according to Claim 1, characterised in that the support based on a refractory oxide is chosen from among silica, alumina, aluminosilicates and mixed oxides comprising alumina together with silica, with zirconium oxide, with cerium oxide and/or with titanium oxide.

3. Catalyst according to Claim 2, characterised in that the support based on a refractory oxide is a support based on alumina which has a specific surface area of between 25 and 250 m²/g, a total pore volume of between 0.5 and 2 cm³/g, and a macroporosity such that the volume of the pores of diameter greater than 1,000 Å is between 0.05 and 0.6 cm³/g.

4. Catalyst according to Claim 3, characterised in that the support based on alumina has a specific surface area of between 70 and 150 m²/g, a total pore volume of between 0.8 and 1.7 cm³/g, and a macroporosity such that the volume of the pores of diameter greater than 1,000 Å is between 0.2 and 0.5 cm³/g.

5. Catalyst according to Claim 3, characterised in that the support based on alumina has been produced by autoclaving agglomerates of active alumina in a neutral or acidic medium, and drying and calcining.

6. Catalyst according to Claim 3, characterised in that the support based on alumina has been produced by proceeding in accordance with the following steps :

A) An ultrafine boehmite or pseudoboehmite sol, the boehmite sol being free of amorphous alumina and the concentration by weight of the sol, expressed as $Al_2O_3$, being between 10 and 25%, is mixed, at a pH below 7.5 and preferably of between 4 and 7, with a proportion of between 30 and 95% by weight (relative to the total solids) of spheroidal alumina particles which are essentially in the form of at least one phase taken from the group comprising the gamma, delta and theta phases, these particles having a micropore volume of between 0.4 and 1 cm³/g and preferably of between 0.7 and 1 cm³/g, and a specific surface area of between 100 and 350 m²/g, and the diameter of the particles being between 1 and 50 microns and preferably being such that at least 50% of the spheroidal particles have a diameter $\varnothing$ centred around a mean value $\varnothing_M$ such that $\varnothing = \varnothing_M \pm 20\% \varnothing_M$.

B) Drops of the mixture are brought to a spheroidal shape and gelled, preferably in accordance with the so-called oil-drop technique.

C) The gelled beads are recovered, dried and calcined at a temperature of between 550 and 1,100°C.

7. Catalyst according to any one of Claims 3 to 6, characterised in that the support based on alumina has been treated with a pore-forming agent taken from the group comprising the pore-forming agents based on cellulose, naphthalene, natural gums and synthetic polymers.

8. Catalyst according to any one of Claims 3 to 6, characterised in that the support based on alumina has been heat-stabilised by introducing into it an alkaline-earth metal, silica and/or a trivalent rare earth.

9. Catalyst according to Claim 1, characterised in that the content of platinum and/or palladium is between 0.05 and 0.15%, the content of iridium and/or rhodium is between 0.005 and 0.02%, the content of iron is between 0.5 and 2% and the content of cerium is between 0.3 and 4.4%.

10. Catalyst according to Claim 1 or 9, characterised in that the active phase consists of cerium, iron, rhodium, platinum and/or palladium.

11. Catalyst according to any one of the preceding claims, characterised in that the active phase furthermore contains at least one metal chosen from among copper, nickel, manganese, tin, germanium, uranium and rhenium.

12. Process for the treatment of the exhaust gases from internal combustion engines, which, in particular, makes it possible to eliminate the greater part of the carbon monoxide, of the unburnt hydrocarbons and of the nitrogen oxides present in these gases, characterised in that the catalyst according to any one of Claims 1 to 11 is used.